# EUROPÄISCHE PATENTSCHRIFT

(11) **EP 2 130 412 B1**
(45) Veröffentlichungstag und Bekanntmachung des Hinweises auf die Patenterteilung: **22.08.2012**
(21) Anmeldenummer: 08716477.8
(22) Anmeldetag: 12.03.2008
(51) Int. Cl.: H05B 41/00

(54) **FEHLERERFASSUNG IN EINEM BETRIEBSGERÄT FÜR LEUCHTMITTEL**
ERROR DETECTOR IN AN OPERATING DEVICE FOR LIGHTING DEVICES
DÉTECTION DE DÉFAUT DANS UN APPAREIL ÉLECTRIQUE POUR MOYEN D'ÉCLAIRAGE

(30) Priorität: 28.03.2007 DE 102007014982; 30.03.2007 DE 102007015508
(43) Veröffentlichungstag der Anmeldung: 09.12.2009
(73) Patentinhaber: Tridonic GmbH & Co KG, 6851 Dornbirn (AT)
(72) Erfinder: ZUDRELL-KOCH, Stefan, A-6845 Hohenems (AT); MARENT, Günter, A-6780 Bartholomäberg (AT)
(74) Vertreter: Rupp, Christian
(86) Internationale Anmeldenummer: PCT/EP2008/001973
(87) Internationale Veröffentlichungsnummer: WO 2008/116561

(56) Entgegenhaltungen:
- EP-A1- 0 871 348
- WO-A-95/28819
- US-A- 5 907 223

## Beschreibung

Die vorliegende Erfindung bezieht sich allgemein auf das Gebiet der Betriebsgeräte für Leuchtmittel. Typische Beispiele sind dabei elektronische Vorschaltgeräte zum Betrieb von Gasentladungslampen, Hochdrucklampen, Leuchtdioden etc. Allgemein ist es Aufgabe dieser Betriebsgeräte, das zugeordnete Leuchtmittel mit einer Versorgungsspannung mit angepasster Spannung und/oder Frequenz zu versorgen.

Die Erfindung bezieht sich insbesondere auf Betriebsgeräte mit Steuereinheiten, denen bspw. abhängig von der Konfiguration des Betriebsgeräts unterschiedliche Messignale zur Erfassung eines Fehlerzustands der Leuchtmittel zuführbar sind.

Wie im folgenden am Beispiel des Leuchtmittels "Entladungslampe" erläutert werden wird, gibt es Fehlerzustände, die sich in unterscheidbaren Messignalen ausdrücken:
Am Ende der Lebensdauer einer Gasentladungslampe stellt sich oft ein Gleichrichtereffekt ein, d.h. der Verlauf der Lampenspannung ist nicht mehr symmetrisch um die Nulllinie, sondern vielmehr verschoben zu dieser.

Wie bei anderen Lampen auch, tritt bei Gasentladungslampen aufgrund von Abnutzungserscheinungen der Heizwendeln am Lebensdauerende der Gasentladungslampe der Effekt auf, dass sich die Lampenelektroden mit der Zeit ungleichmässig abnutzen, d.h. die Abtragung der Emissionsschichten auf den Lampenelektroden ist unterschiedlich.

Aufgrund dieser unterschiedlichen Abnutzung der Lampenelektroden entstehen Unterschiede im Emissionsvermögen der beiden Lampenelektroden.

Dieses unterschiedliche Emissionsvermögen führt dazu, dass in der entsprechenden Gasentladungslampe von der einen Lampenelektrode zu der anderen Lampenelektrode ein höherer Strom fliesst als umgekehrt, so dass der zeitliche Verlauf des Lampenstroms während einer Halbwelle eine Überhöhung aufweist. Durch die unterschiedliche Abtragung der beiden Lampenelektroden entstehen somit Asymmetrien, die nicht nur ein stärkeres Lichtflimmern am Lebensdauerende der Gasentladungslampe hervorrufen, sondern sogar im Extremfall einen Betrieb der Gasentladungslampe nur während einer Halbwelle, d.h. während der überhöhten Halbwelle zulassen. Die Gasentladungslampe wirkt gleichsam wie ein Gleichrichter, so dass der zuvor beschriebene Effekt als "Gleichrichteffekt" bezeichnet wird.

An derjenigen Lampenelektrode, die sich im Lauf der Zeit stärker abgenutzt hat, ist die Austrittsarbeit für die Elektronen höher als an der weniger stark abgenutzten Elektrode.

Als Austrittarbeit wird allgemein die Minimalenergie bezeichnet, die erforderlich ist, um ein Elektron aus einem Metall, im vorliegenden Fall aus der Lampenelektrode, herauszuziehen. Die Dipolschicht an der Oberfläche des Metalls, d.h. der Lampenelektrode, ist dabei ein wichtiger Faktor für die Bestimmung der Austrittsarbeit.

Die stärker abgenutzte Lampenelektrode, die eine höhere Austrittsarbeit für die Elektronen aufweist, erhitzt sich folglich bei Inbetriebnahme der Gasentladungslampe stärker als die weniger stark abgenutzte Elektrode. Die Erhitzung der Lampenelektrode kann insbesondere bei Lampen mit geringem Durchmesser so stark werden, dass sogar Teile des Lampenglaskolbens schmelzen können. Um die aus der Erhitzung des Lampenglaskolbens resultierende Unfallgefahr während des Betriebs der Gasentladungslampe zu vermeiden, muss folglich der Gleichrichteffekt erkannt und ggf. die Gasentladungslampe abgeschaltet oder deren Leistungsaufnahme verringert werden.

Indessen ist zu unterscheiden zwischen einem sich langsam einstellenden Gleichrichtereffekt am Ende der Lebensdauer einer Lampe und einem sich im Verhältnis dazu sehr schnell einstellenden Gleichrichtereffekt, der auch als 'harter Gleichrichtereffekt' bezeichnet wird. Diese harte Gleichrichtereffekt muss erkannt werden und es müssen unverzüglich Gegenmassnahmen ergriffen werden, da im Zuge dieses harten Gleichrichtereffekts sehr hohe Spannungen an der Lampe auftreten können. Auf jeden Fall besteht die Anforderung an ein Vorschaltgerät, dass sowohl für den schleichenden wie auch für den schnell auftretenden Gleichrichtereffekt Gegenmaßnahmen vorgesehen sind.

Die Vorschriften hinsichtlich des schleichenden Gleichrichtereffekt sind auf die Lampenleistung gerichtet, d.h. bei auftretendem schleichenden Gleichrichtereffekt darf sich die Lampenleistung prozentual nur in einem bestimmten Bereich von der Sollleistung entfernen.

Dagegen ist beim schnellen Gleichrichtereffekt der Spannungspeak, der einen vorgeschriebenen Sollwert nicht überschreiten darf.

Besonders wichtig ist diese Erkennung natürlich beim Anliegen der Zündspannung, die ja wesentlich höher ist als die Brennspannung der Lampe.

Der harte bzw. schleichende Gleichrichtereffekt sind nur Beispiele, wie bei einem Betriebsgerät für Leuchtmittel unterschiedliche Fehler erkannt werden müssen, um bei Bedarf geeignete Gegenmassnahmen zu treffen.

Aus der W09934647 ist bereits die Erkennung des in einer Gasentladungslampe auftretenden Gleichrichteffekts bekannt. Dabei wird zum Erkennen des Gleichrichteffekts, die an einer zu überwachenden Gasentladungslampe anliegende Lampenspannung oder eine davon abhängige Grösse erfasst und integriert, wobei auf das Vorliegen eines Gleichrichteffekts geschlossen wird, falls als das Integrationsergebnis von einem bestimmten Sollwert abweicht.

Aus der US 5,907,223 A ist ein AC-AC Vorschaltgerät für eine Entladungslampe (z. B. eine Leuchtstofflampe) bekannt, das einen PFC-Wandler mit einem Trenntransformator und einen DC-AC Wechselrichter auf der Sekundärseite des Trenntransformators umfasst. Der AC-Eingang ist von der Lampenlast durch den Transformator des PFC-Wandlers isoliert. Die Schaltfrequenz des PFC-Wandlers kann daher höher sein als die Lampenstrom-Frequenz (und die Schaltfrequenz des DC-AC-Wechselrichters), um damit eine Reduktion der Größe und des Gewichts des Vorschaltgeräts zu ermöglichen, ohne eine EMI-Strahlungsemission der Lampe zu erhöhen.

Aufgabe der vorliegenden Erfindung ist es nunmehr, eine Technik bereitzustellen, die es ermöglicht, anhand eines Rückführsignals von dem Leuchtmittel (oder des das Leuchtmittel aufweisenden Lastkreises) unterschiedliche Fehlertypen zu diskriminieren.

Diese Aufgabe wird erfindungsgemäß durch die Merkmale der unabhängigen Ansprüche gelöst. Vorteilhafte Ausgestaltungen sind in den abhängigen Ansprüche niedergelegt.

Gemäss einem ersten Aspekt der Erfindung ist eine Steuerschaltung für ein Betriebsgerät für Leuchtmittel vorgesehen. Von dem Leuchtmittel wird dabei ein Rückführsignal einem Eingang der Steuerschaltung zugeführt. Die Steuerschaltung weist einen Fehlererkennungsblock auf, der anhand des an diesem Eingang anliegenden Rückführsignals wenigstens zwei unterschiedliche Typen an Leuchtmittelfehlern erkennt.

Der Fehlererkennungsblock kann das Rückführsignal anhand wenigsten zweier unterschiedlicher Kriterien auswerten.

Das Rückführsignal kann in der Steuerschaltung einem Komparator zugeführt werden, um mit einem Referenzwert verglichen zu werden. Der Fehlererkennungsblock kann das Tastverhältnis des Komparators anhand wenigsten zweier unterschiedlicher Kriterien auswerten.

Die Kriterien können wenigstens eines sein von:
- Dauer der Abweichung des Tastverhältnisses von einem Sollwert, insbesondere 50%, und
- Betrag der Abweichung des Tastverhältnisses von einem Sollwert, insbesondere 50%.

Das Kriterium "Dauer der Abweichung" kann mittels Tiefpassfilterung oder Integration des das Tastverhältnis wiedergebenden Signals in dem Fehlererkennungsblock implementiert sein.

Das Kriterium "Betrag der Abweichung" kann mittels des das Tastverhältnis wiedergebenden Signals mittels eines Schwellenwertvergleichs in dem Fehlererkennungsblock implementiert sein.

Der Fehlererkennungsblock kann die beiden folgenden Kriterien anwenden:
- eine geringe Abweichung des Tastverhältnisses von einem Sollwert, insbesondere 50%, über einen längeren Zeitraum wird als Fehler erkannt, und
- eine im Vergleich dazu grosse Abweichung des Tastverhältnisses von einem Sollwert, insbesondere 50%, in einem im Vergleich dazu kurzen Zeitraum wird als Fehler erkannt.

Das Rückführsignal kann die Lampenspannung oder eine davon abhängige Grösse sein.

Das Leuchtmittel kann insbesondere eine Entladungslampe sein.

Die Steuerschaltung kann mittels eines Ausgangssignals einen Wechselrichter ansteuern an dem ein die Lampe enthaltender Lastkreis angeschlossen ist.

Die Steuerschaltung kann dazu ausgelegt sein, bei Erkennung wenigstens eines Fehlertyps ein Signal auszugeben, das den Wechselrichter abschaltet.

Die Erfindung bezieht sich auch auf ein Verfahren zur Fehlertyperkennung in einer Steuerschaltung für ein Betriebsgerät für Leuchtmittel,
wobei anhand eines mittels eines Rückführsignals von dem Leuchtmittel erfassten Parameters des Leuchtmittels wenigstens zwei unterschiedliche Typen an Leuchtmittelfehlern erkannt werden, wobei die unterschiedlichen Fehlertypen erkannt werden, indem das Rückführsignal anhand wenigsten zweier unterschiedlicher Kriterien auswertet wird.

Weitere Vorteile, Merkmale und Eigenschaften der Erfindung sollen nunmehr bezugnehmend auf die Figuren der begleitenden Zeichnungen erläutert werden.
Fig. 1 zeigt eine schematische Ansicht einer digitalen integrierten Steuerschaltung (Controller), an die ein Lastkreis angeschlossen ist, der Leuchtmittel enthält,
Fig. 2 zeigt den Signalverlauf für den Fall eines schleichenden Gleichrichtereffekts, und
Fig. 3 zeigt den Signalverlauf für den Fall eines schnellen Gleichrichtereffekts.

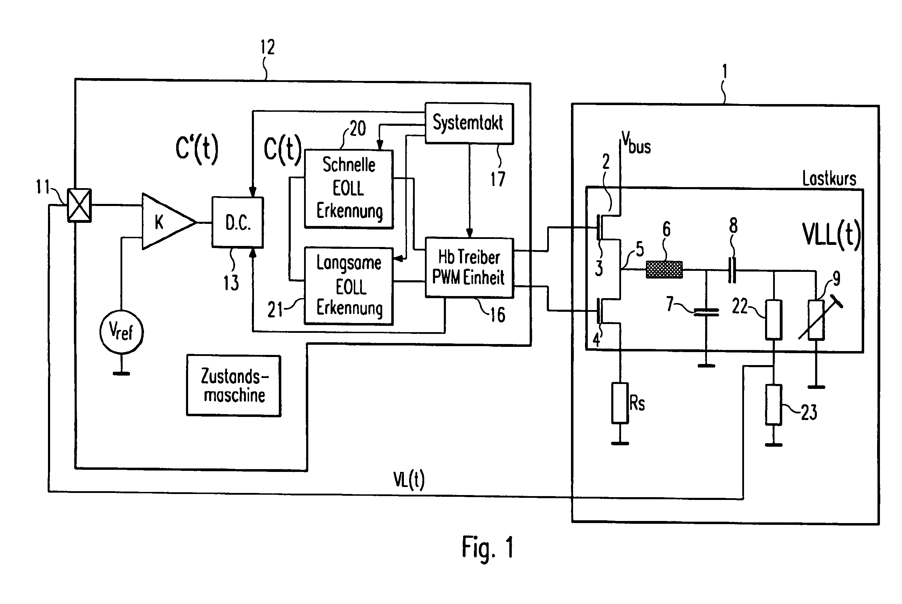

Die Erfindung soll nunmehr bezugnehmend auf die Schaltung von Figur 1 erläutert werden.

In Fig. 1 ist schematisch mit dem Bezugszeichen 1 ein Lastkreis bezeichnet. Diesem Lastkreis 1 wird eine im wesentlichen konstante (optional auf einen Sollwert geregelte) Zwischenkreisspannung (Busspannung) V_{bus} zugeführt, wobei diese Busspannung eine DC-Spannung ist. Genauer gesagt wird diese Busspannung einer Halbbrückenschaltung zugeführt, die schematisch mit dem Bezugszeichen 2 bezeichnet ist und die zwei wechselseitig getaktete Schalter 3, 4 aufweist. Vorzugsweise sind diese Schalter 3, 4 MOSFETs.

An dem Mittenpunkt 5 der Halbbrückenschaltung 2 ist der eigentliche Lastkreis angekoppelt, wobei der Lastkreis eine Serienresonanzschaltung bestehend aus einer Drossel 6 und einem Kondensator 7 sowie einem Koppelkondensator 8 aufweist.

Parallel zu dem Resonanzkondensator 7 sind Leuchtmittel 9 angeschlossen, die beispielsweise eine Gasentladungslampe, eine oder mehrere Hochdrucklampen oder Leuchtdioden sein können. Wie in der Figur 1 schematisch dargestellt können diese Leuchtmittel insbesondere eine frequenzabhängige Kennlinie aufweisen. Daher kann die Frequenz der Versorgungsspannung für die Leuchtmittel 9, die die Halbbrückenschaltung ausgehend von der DC-Busspannung erzeugt, zur Einstellung der Leistung der Leuchtmittel 9 dienen.

Die Leistungssteuerung kann auch über Einstellung des Tastverhältnisses erfolgen (PWM-Modulation).

In Figur 1 ist dargestellt, dass die Lampenspannung VL(t) über einen Spannungsteiler 22, 23 parallel zu der schematisch als variabler Widerstand dargestellten Lampe 9 abgegriffen und einem Pin 11 der integrierten Schaltung 12 zurückgeführt wird.

Über einen Messwiderstand Rs in Serie zu dem potentialniedrigeren Schalter 4 des Wechselrichters 2 kann der Wechselrichterstrom erfasst und zur Steuereinheit 12 zurückgeführt werden.

Alternativ oder zusätzlich kann auch der Lampenstrom selbst erfasst und zur Steuereinheit 12 werden.

Schliesslich können zu der Steuereinheit 12 auch Parameter aus einem Zwischenkreis (nicht dargestellt) zurückgeführt werden, der die einen aktiven PFC aufweisen kann und die Spannung VBUS bereitstellt. Die Steuereinheit 12 kann auch aktive Bauteile des Zwischenkreises, insbesondere einen Schalter des aktiven PFCs ansteuern, um eine (digitale) Zwischenkreisregelung durchzuführen.

Die Steuerschaltung soll nunmehr in der Lage sein, anhand des Rückführsignals VL(t) unterschiedliche Typen an Fehlern der Leuchtmittel 9 erkennen zu kennen. Diese Rückführsignal kann bspw. auch eine von der Lampenspannung abhängige Grösse sein.

Insbesondere kann die Steuerschaltung dazu ausgebildet sein, zwei unterschiedliche Effekte in dem Rückführsignal zu erkennen:
- ein kurzzeitiges Überschreiten des Spitzenwerts der Lampenspannung im Fall des schnellen Gleichrichtereffekts, und
- eine geringe Abweichung vom symmetrischen Lampenspannungsverlauf über eine längere Zeitdauer hin für den Fall des schleichenden Gleichrichtereffektes.

Zur Diskriminierung der beiden oben angeführten Ereignisse wird in der Steuerschaltung das an dem Pin 11 zugeführte Rückführsignal einem Komparator K zugeführt, der es mit einer Referenzspannung Vref vergleicht. Das Ergebnis des Vergleichs wird einer Tastverhältnis-Auswerteeinheit 13 zugeführt, die von dem Systemtakt 17 getaktet wird. Das Tastverhältnis kann bspw. ermittelt werden, indem in der Einheit 13 ein Digitalzähler vorgesehen wird, der bspw. bei dem Ausgang logisch NULL des Komparators abwärts zählt und bei dem Ausgang logisch EINS aufwärts zählt. Am Ende einer Periode der Ansteuerung des Wechselrichters 2 stellt dann die Abweichung des Zählerstands von seinem Ausgangsstand ein Mass für die Abweichung des Tastverhältnisses von 50% dar. Wie schematisch in Figur 1 dargestellt wird der Zähler nach jeweils einer Wechselrichter-Periode wieder zurückgesetzt (initialisiert).

Der Tastverhältnis-Abweichungswert der zurückliegenden Wechselrichter-Periode wird dann wenigstens zwei parallelen Logik-Auswertungszweigen zugeführt, die jeweils zu einer Lampenabschaltung bei erkanntem schleichenden (Langsame EOLL Erkennung) bzw. schnellen (schnelle EOLL Erkennung) Gleichrichtereffekt ausgebildet sind. "EOLL" steht dabei für "End of Lamp Life" (Ende der Lampenlebensdauer).

Bei Erkennung eines der beiden Fehlertypen können vergleichbare oder auch unterschiedliche Gegenmassnahmen getroffen werden. Insbesondere kann als Gegenmassnahme die Ansteuerung der Leuchtmittel verändert werden (Fehlerbetriebsmodus). Im dargestellten Beispiel wird bei einer Fehlererkennung der Wechselrichter (Halbbrücken)-Treiber 16 angesteuert, so dass dieser den Wechselrichter 2 in einem Fehlermodus betriebt, der bspw. in einer Abschaltung des Wechselrichters und somit der Lampe besteht.

Zur Erfassung des schleichenden Gleichrichtereffektes wird eine kleine Abweichung eines zeitlich stark gefilterten Signals beurteilt, während bei dem Zweig zur Erfassung des schnellen Gleichrichtereffekts eine verhältnismäßig große aber nur kurzzeitig und somit einem ungefilterten Signal auftretende Abweichung erfasst wird.

Aufgrund dieser unterschiedlichen Zeitkonstanten wird vorzugsweise die Erfassung des schleichenden Gleichrichtereffekts durch einen Mikrocontroller durchgeführt, während die zeitkritische Erfassung des schnellen Gleichrichtereffekts bevorzugt durch eine Hardwarelogik (bspw. ASIC) ausgeführt wird.

Zur Erfassung des schleichenden Gleichrichtereffekts wird daher das Tastverhätnis (Duty cycle) des Ausgangssignals des Komparators tiefpaßgefiltert (entspricht einer Integration), so dass sich nur langfristige Abweichungen zu einem Wert oberhalb eines vorgegebenen Schwellenwerts akkumulieren und somit eine Fehlerabschaltung (oder eine andere Fehler-Gegenmassnahme) auslösen können.

Während die Abschaltzeitkonstante für den schleichenden Gleichrichtereffekt bpsw. im Bereich von Millisekunden liegt (d.h. solange muss die Abweichung in der Symmetrie des Lampenspannungssignal vorliegen, um zu einer Abschaltung zu führen) ist die entsprechende Zeitkonstante bei dem Block zur Erkennung des schnellen Gleichrichtereffekts im Bereich von einigen 100µs.

Wie oben bereits ausgeführt, sind die einen Korridor definierenden Schwellenwerte für die zulässige Abweichung des tiefpaßgefilterten Signals zur Erkennung des schleichenden Gleichrichtereffekts verhältnismäßig eng gesetzt.

Dagegen sind die zulässigen Abweichungen des Tastverhältnisses zur Erfassung des schnellen Gleichrichtereffekts verhältnismäßig breit gesetzt, da ja verhältnismäßig große Spitzenwertabweichungen erfasst werden sollen, die innerhalb einer kurzen Zeitdauer auftreten.

Allgemein sieht die Erfindung also vor, dass anhand des Tastverhältnisses des Lampenspannungssignals unterschiedliche Fehlertypen der Lampe erkannt werden können, in dem das Tastverhältnis unterschiedlichen Bewertungskriterien unterzogen wird. Die verschiedenen Fehlerereignisse können also durch unterschiedliche zeitliche Diskriminierung sowie unterschiedliche Schwellenwertvorgaben für den Zählerstand unterschieden werden.

Allgemein kann als bei der Erfindung ein einziges Signal zur Fehlerabschaltung dahingehend ausgewertet werden, ob eine große Abweichung innerhalb einer kurzen Zeitdauer und/oder eine kleine Abweichung während einer großen Zeitdauer auftritt.

Es kann indessen auch vorgesehen sein, dass nicht ein einziger Komparator K vorgesehen ist, sondern dass Rückführsignal durch mehrere Komparatoren mit unterschiedlichen Referenzsignalen verglichen wird.

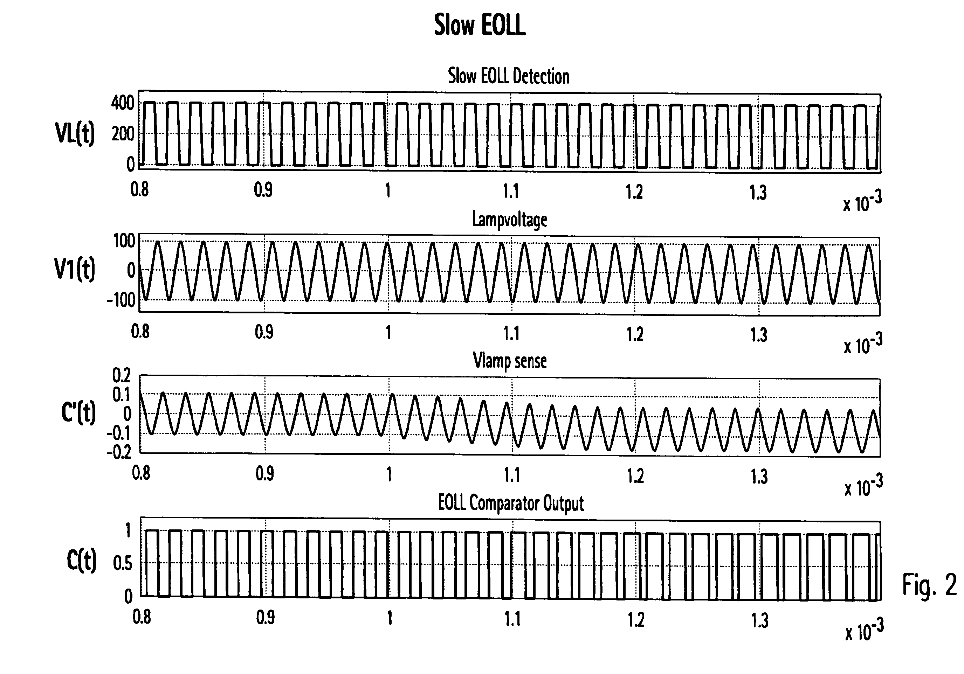

In Fig. 2 ist dargestellt, wie die Signale bei dem Auftreten eines sogenannten langsamen oder auch schleichenden Gleichrichtereffekts gemäß der Schaltung von Fig. 1 auftreten und verarbeitet werden. Die Lampenspannung VLL(t) wird über einen Spannungsteiler 22, 23 parallel zu der schematisch als variabler Widerstand dargestellten Lampe 9 abgegriffen und einem Pin 11 der integrierten Schaltung 12 zurückgeführt. Während die Lampenspannung VLL(t) einen Pegel von bspw. 400 V hat, wird das überwachte Signal Vl(t) durch den Spannungsteiler 22, 23 in einem Verhältnis von bspw. ca. 400:1 herabgesetzt, damit das Signal von der Steuerlogik 12 auf einem für diese verarbeitbaren Pegel erfaßt werden kann. Zur Diskriminierung der beiden oben angeführten Ereignisse wird in der Steuerschaltung das an dem Pin 11 zugeführte Rückführsignal einem Komparator K zugeführt, der es mit einer Referenzspannung Vref vergleicht und ein Ausgangssignal C'(t) generiert.

Zur Erfassung des schleichenden Gleichrichtereffekts wird daher das Tastverhältnis (Duty cycle) des Ausgangssignals C'(t) des Komparators tiefpaßgefiltert (entspricht einer Integration), so dass sich nur langfristige Abweichungen zu einem Wert oberhalb eines vorgegebenen Schwellenwerts akkumulieren und somit eine Fehlerabschaltung (oder eine andere Fehler-Gegenmassnahme) auslösen können.

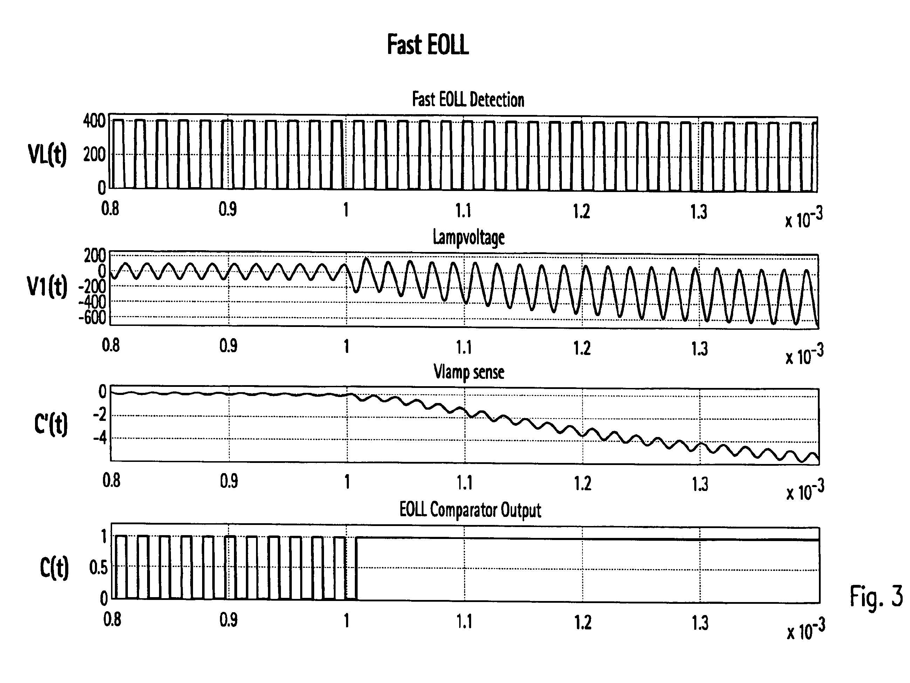

In Fig. 3 ist dargestellt, wie bei einem schnellen Gleichrichteffekt aufgrund der großen Spitzenwertabweichung eine dauerhafte Abweichung signalisiert und der Auswerteeinheit 13 zugeführt wird.

## Patentansprüche

1. Steuerschaltung (12) für ein Betriebsgerät für Leuchtmittel (9),
wobei von dem Leuchtmittel (9) ein Rückführsignal einem Eingang der Steuerschaltung (12) zugeführt ist und die Steuerschaltung (12) einen Fehlererkennungsblock (K, 13, 20, 21) aufweist, der anhand des an diesem Eingang anliegenden Rückführsignals wenigstens zwei unterschiedliche Typen an Leuchtmittelfehlern erkennt,
**dadurch gekennzeichnet, dass**
die unterschiedlichen Fehlertypen erkannt werden, indem Fehlererkennungsblock (K, 13, 20, 21) das Rückführsignal anhand wenigsten zweier unterschiedlicher Kriterien auswertet.

2. Steuerschaltung (12) nach dem vorhergehenden Anspruch 1, wobei
- das Rückführsignal in der Steuerschaltung (12) einem Komparator (k) zugeführt wird, um mit einem Referenzwert verglichen zu werden, und
- der Fehlererkennungsblock (K, 13, 20, 21) das Tastverhältnis des Komparators (K) anhand wenigsten zweier unterschiedlicher Kriterien auswertet.

3. Steuerschaltung (12) nach Anspruch 2, wobei die Kriterien wenigstens eines sind von:
- Dauer der Abweichung des Tastverhältnisses von einem Sollwert, insbesondere 50%, und
- Betrag der Abweichung des Tastverhältnisses von einem Sollwert, insbesondere 50%.

4. Steuerschaltung (12) nach Anspruch 3, wobei das Kriterium "Dauer der Abweichung" mittels Tiefpassfilterung oder Integration des das Tastverhältnis wiedergebenden Signals in dem Fehlererkennungsblock (K, 13, 20, 21) implementiert ist.

5. Steuerschaltung (12) nach Anspruch 3, wobei das Kriterium "Betrag der Abweichung" mittels des das Tastverhältnis wiedergebenden Signals mittels eines Schwellenwertvergleichs in dem Fehlererkennungsblock (K, 13, 20, 21) implementiert ist.

6. Steuerschaltung (12) nach einem der Ansprüche 2 bis 5, wobei der Fehlererkennungsblock (K, 13, 20, 21) die beiden folgenden Kriterien anwendet:
- eine geringe Abweichung des Tastverhältnisses von einem Sollwert, insbesondere 50%, über einen längeren Zeitraum, und
- eine im Vergleich dazu grosse Abweichung des Tastverhältnisses von einem Sollwert, insbesondere 50%, in einem im Vergleich dazu kurzen Zeitraum.

7. Steuerschaltung (12) nach einem der vorhergehenden Ansprüche, bei der das Rückführsignal die Lampenspannung oder eine davon abhängige Größe ist.

8. Steuerschaltung (12) nach einem der vorhergehenden Ansprüche, bei der das Leuchtmittel (9) eine Entladungslampe ist.

9. Steuerschaltung (12) nach einem der vorhergehenden Ansprüche, die mittels eines Ausgangssignals einen Wechselrichter (2) ansteuert, an dem ein die Lampe (9) enthaltender Lastkreis (1) angeschlossen ist.

10. Steuerschaltung (12) nach Anspruch 9, bei der die Steuerschaltung (12) dazu ausgelegt ist, bei Erkennung wenigstens eines Fehlertyps ein Signal auszugeben, das den Wechselrichter abschaltet.

11. Betriebsgerät für Leuchtmittel (9), insbesondere Elektronisches Vorschaltgerät für Gasentladungslampen, aufweisend eine Steuerschaltung (12) nach einem der vorhergehenden Ansprüche.

12. Leuchte, aufweisend ein Leuchtmittel (9) und ein Betriebsgerät nach Anspruch 11.

13. Verfahren zur Fehlertyperkennung in einem Steuerschaltung (12) für ein Betriebsgerät für Leuchtmittel (9), wobei anhand eines mittels eines Rückführsignals von dem Leuchtmittel (9) erfassten Parameters des Leuchtmittels (9) wenigstens zwei unterschiedliche Typen an Leuchtmittelfehlern erkannt werden,
**dadurch gekennzeichnet, dass**
die unterschiedlichen Fehlertypen erkannt werden, indem das Rückführsignal anhand wenigsten zweier unterschiedlicher Kriterien auswertet wird.

14. Verfahren nach Anspruch 13, wobei
- das Rückführsignal in der Steuerschaltung (12) einem Komparator zugeführt wird, um mit einem Referenzwert verglichen zu werden, und
- der Fehlererkennungsblock (K, 13, 20, 21) das Tastverhältnis des Komparators anhand der wenigsten zweier unterschiedlicher Kriterien auswertet.

15. Verfahren nach Anspruch 14, wobei die Kriterien wenigstens eines sind von:
- Dauer der Abweichung des Tastverhältnisses von einem Sollwert, insbesondere 50%, und - Betrag der Abweichung des Tastverhältnisses von einem Sollwert, insbesondere 50%.

16. Verfahren nach Anspruch 15, wobei das Kriterium "Dauer der Abweichung" mittels Tiefpassfilterung oder Integration des das Tastverhältnis wiedergebenden Signals in dem Fehlererkennungsblock (K, 13, 20, 21) angewandt wird.

17. Verfahren nach Anspruch 15, wobei das Kriterium "Betrag der Abweichung" mittels des das Tastverhältnis wiedergebenden Signals mittels eines Schwellenwertvergleichs in dem Fehlererkennungsblock; (K, 13, 20, 21) angewandt wird.

18. Verfahren nach Anspruch 15, wobei die beiden folgenden Kriterien anwendet werden:
- eine geringe Abweichung des Tastverhältnisses von einem Sollwert, insbesondere 50%, über einen längeren Zeitraum, und
- eine im Vergleich dazu große Abweichung des Tastverhältnisses von einem Sollwert, insbesondere 50%, in einem im Vergleich dazu kurzen Zeitraum.

19. Verfahren nach einem der Ansprüche 14 bis 18, bei der das Rückführsignal die Lampenspannung oder eine davon abhängige Größe ist.

20. Verfahren nach Anspruch 14 bis 19, die mittels eines Ausgangssignals einen Wechselrichter ansteuert, an dem ein die Lampe enthaltender Lastkreis angeschlossen ist.

21. Verfahren nach Anspruch 20, bei der bei Erkennung wenigstens eines Fehlertyps der Wechselrichter abgeschaltet wird.

22. Verwendung eines ASICs oder Mikrocontrollers oder einer Hybridversion davon, als Steuerschaltung zur Implementierung eines Verfahrens nach einem der Ansprüche 14 bis 21.

## Claims

1. Control circuit (12) for an operating device for light-emitting means (9), a feedback signal being supplied from the light-emitting means (9) to an input of the control circuit (12), and the control circuit (12) having a fault identification block (K, 13, 20, 21), which identifies at least two different types of light-emitting means faults on the basis of the feedback signal applied to this input, **characterized in that** the different fault types are identified by virtue of the fault identification block (K, 13, 20, 21) evaluating the feedback signal on the basis of at least two different criteria.

2. Control circuit (12) according to the preceding Claim 1,
- the feedback signal being supplied to a comparator (k) in the control circuit (12) in order to be compared with a reference value, and
- the fault identification block (K, 13, 20, 21) evaluating the duty factor of the comparator (K) on the basis of at least two different criteria.

3. Control circuit (12) according to Claim 2, the criteria being at least one of the following:
- duration of the discrepancy between the duty factor and a setpoint value, in particular 50%, and
- magnitude of the discrepancy between the duty factor and a setpoint value, in particular 50%.

4. Control circuit (12) according to Claim 3, the criterion "duration of the discrepancy" being implemented by means of low-pass filtering or integration of the signal reproducing the duty factor in the fault identification block (K, 13, 20, 21).

5. Control circuit (12) according to Claim 3, the criterion "magnitude of the discrepancy" being implemented by means of the signal reproducing the duty factor by means of a threshold value comparison in the fault identification block (K, 13, 20, 21).

6. Control circuit (12) according to one of Claims 2 to 5, the fault identification block (K, 13, 20, 21) using both of the following criteria:
- a slight discrepancy between the duty factor and a setpoint value, in particular 50%, over a relatively long period of time, and
- a comparatively large discrepancy between the duty factor and a setpoint value, in particular 50%, in a comparatively short period of time.

7. Control circuit (12) according to one of the preceding claims, in which the feedback signal is the lamp voltage or a variable dependent thereon.

8. Control circuit (12) according to one of the preceding claims, in which the light-emitting means (9) is a discharge lamp.

9. Control circuit (12) according to one of the preceding claims, which drives an inverter (2) by means of an output signal, with a load circuit (1) containing the lamp (9) being connected to said inverter.

10. Control circuit (12) according to Claim 9, in which the control circuit (12) is designed to output a signal for disconnecting the inverter in the event that at least one fault type is identified.

11. Operating device for light-emitting means (9), in particular electronic ballast for gas discharge lamps, having a control circuit (12) according to one of the preceding claims.

12. Luminaire, having a light-emitting means (9) and an operating device according to Claim 11.

13. Method for fault type identification in a control circuit (12) for an operating device for light-emitting means (9), at least two different types of light-emitting means faults being identified on the basis of a parameter of the light-emitting means (9) which is detected by means of a feedback signal from the light-emitting means (9), **characterized in that** the different fault types are identified by virtue of the feedback signal being evaluated on the basis of at least two different criteria.

14. Method according to Claim 13,
- the feedback signal being supplied to a comparator in the control circuit (12) in order to be compared with a reference value, and
- the fault identification block (K, 13, 20, 21) evaluating the duty factor of the comparator on the basis of the at least two different criteria.

15. Method according to Claim 14, the criteria being at least one of the following:
- duration of the discrepancy between the duty factor and a setpoint value, in particular 50%, and
- magnitude of the discrepancy between the duty factor and a setpoint value, in particular 50%.

16. Method according to Claim 15, the criterion "duration of the discrepancy" being applied by means of low-pass filtering or integration of the signal reproducing the duty factor in the fault identification block (K, 13, 20, 21).

17. Method according to Claim 15, the criterion "magnitude of the discrepancy" being applied by means of the signal reproducing the duty factor by means of a threshold value comparison in the fault identification block (K, 13, 20, 21).

18. Method according to Claim 15, the two following criteria being applied:
- a slight discrepancy between the duty factor and a setpoint value, in particular 50%, over a relatively long period of time, and
- a comparatively large discrepancy between the duty factor and a setpoint value, in particular 50%, in a comparatively short period of time.

19. Method according to one of Claims 14 to 18, in which the feedback signal is the lamp voltage or a variable dependent thereon.

20. Method according to Claims 14 to 19, which drives an inverter by means of an output signal, with a load circuit containing the lamp being connected to said inverter.

21. Method according to Claim 20, in which the inverter is disconnected in the event of at least one fault type being identified.

22. Use of an ASIC or microcontroller or a hybrid version thereof as control circuit for implementing a method according to one of Claims 14 to 21.

## Revendications

1. Circuit de commande (12) pour un dispositif d'alimentation pour moyen d'éclairage (9), dans lequel un signal de rétroaction est fourni par le moyen d'éclairage (9) à une entrée du circuit de commande (12) et le circuit de commande (12) présente un bloc d'identification d'erreur (K, 13, 20, 21) qui, sur la base du signal de rétroaction appliqué à cette entrée, identifie au moins deux types différents d'erreurs de moyen d'éclairage,
**caractérisé en ce que**
les différents types d'erreurs sont identifiés **en ce que** le bloc d'identification d'erreur (K, 13, 20, 21) évalue le signal de rétroaction sur la base d'au moins deux critères différents.

2. Circuit de commande (12) selon la revendication 1 précédente, dans lequel
- le signal de rétroaction est fourni dans le circuit de commande (12) à un comparateur (k), de manière à être comparé à une valeur de référence, et
- le bloc d'identification d'erreur (K, 13, 20, 21) évalue le rapport cyclique du comparateur (K) à partir d'au moins deux critères différents.

3. Circuit de commande (12) selon la revendication 2, dans lequel les critères correspondent à au moins un critère parmi :
- durée de l'écart du rapport cyclique par rapport à une valeur de consigne, en particulier 50%, et
- amplitude de l'écart du rapport cyclique par rapport à une valeur de consigne, en particulier 50%.

4. Circuit de commande (12) selon la revendication 3, dans lequel le critère « durée de l'écart » est implémenté dans le bloc d'identification d'erreur (K, 13, 20, 21) au moyen de filtrage passe-bas ou d'intégration du signal représentant le rapport cyclique.

5. Circuit de commande (12) selon la revendication 3, dans lequel le critère « amplitude de l'écart » est implémenté dans le bloc d'identification d'erreur (K, 13, 20, 21) au moyen du signal représentant le rapport cyclique au moyen d'une comparaison de valeurs de seuil.

6. Circuit de commande (12) selon l'une des revendications 2 à 5, dans lequel le bloc d'identification d'erreur (K, 13, 20, 21) utilise les deux critères suivants :
- un écart faible du rapport cyclique par rapport à une valeur de consigne, en particulier 50%, sur une longue période de temps, et
- un écart, comparativement grand, du rapport cyclique par rapport à une valeur de consigne, en particulier 50%, dans une période de temps comparativement courte.

7. Circuit de commande (12) selon l'une des revendications précédentes, dans lequel le signal de rétroaction est la tension de la lampe ou une variable dépendante de celle-ci.

8. Circuit de commande (12) selon l'une des revendications précédentes, dans lequel le moyen d'éclairage (9) est une lampe à décharge.

9. Circuit de commande (12) selon l'une des revendications précédentes, qui commande un onduleur (2) au moyen d'un signal de sortie, un circuit de charge (1) comprenant la lampe (9) étant raccordé à l'onduleur (2).

10. Circuit de commande (12) selon la revendication 9, le circuit de commande (12) étant conçu pour, en cas d'identification d'au moins un type d'erreur, produire un signal qui éteint l'onduleur.

11. Dispositif d'alimentation pour moyen d'éclairage (9), en particulier ballast électronique pour lampes à décharge de gaz, présentant un circuit de commande (12) selon l'une des revendications précédentes.

12. Luminaire, présentant un moyen d'éclairage (9) et un dispositif d'alimentation selon la revendication 11.

13. Procédé pour l'identification de type d'erreur dans un circuit de commande (12) pour un dispositif d'alimentation pour moyen d'éclairage (9), dans lequel à partir d'un paramètre du moyen d'éclairage (9), ledit paramètre étant détecté au moyen d'un signal de rétroaction du moyen d'éclairage (9), au moins deux types différents d'erreurs de moyen d'éclairage sont identifiés,
**caractérisé en ce que**
les différents types d'erreur sont identifiés **en ce que** le signal de rétroaction est évalué à partir d'au moins deux critères différents.

14. Procédé selon la revendication 13, dans lequel
- le signal de rétroaction est fourni dans le circuit de commande (12) à un comparateur (k), de manière à être comparé à une valeur de référence, et
- le bloc d'identification d'erreur (K, 13, 20, 21) évalue le rapport cyclique du comparateur (K) à partir d'au moins deux critères différents.

15. Procédé selon la revendication 14, dans lequel les critères correspondent à au moins un critère parmi :
- durée de l'écart du rapport cyclique par rapport à une valeur de consigne, en particulier 50%, et
- amplitude de l'écart du rapport cyclique par rapport à une valeur de consigne, en particulier 50%.

16. Procédé selon la revendication 15, dans lequel le critère « durée de l'écart » est appliqué dans le bloc d'identification d'erreur (K, 13, 20, 21) au moyen de filtrage passe-bas ou d'intégration du signal représentant le rapport cyclique.

17. Procédé selon la revendication 15, dans lequel le critère « amplitude de l'écart » est appliqué dans le bloc d'identification d'erreur (K, 13, 20, 21) au moyen du signal représentant le rapport cyclique au moyen d'une comparaison de valeurs de seuil.

18. Procédé selon la revendication 15, dans lequel les deux critères suivants sont appliqués :
- un écart faible du rapport cyclique par rapport à une valeur de consigne, en particulier 50%, sur une longue période de temps, et
- un écart, comparativement grand, du rapport cyclique par rapport à une valeur de consigne, en particulier 50%, dans une période de temps comparativement courte.

19. Procédé selon l'une des revendications 14 à 18, dans lequel le signal de rétroaction est la tension de la lampe ou une variable dépendante de celle-ci.

20. Procédé selon l'une des revendications 14 à 19, qui commande un onduleur au moyen d'un signal de sortie, un circuit de charge comprenant la lampe étant raccordé à l'onduleur.

21. Procédé selon la revendication 20, dans lequel l'onduleur est éteint en cas d'identification d'au moins un type d'erreur.

22. Utilisation d'un ASIC ou microcontrôleur ou une version hybride de ceux-ci, comme circuit de commande pour l'implémentation d'un procédé selon l'une des revendications 14 à 21.
